# EUROPEAN PATENT APPLICATION

(11) **EP 4 679 151 A1**
(43) Date of publication of application: **14.01.2026**
(21) Application number: 24773817.2
(22) Date of filing: 04.02.2024
(51) Int. Cl.: G02B 6/293, G02B 6/35, H04J 14/02

(54) **WAVELENGTH SELECTIVE SWITCH AND RELATED OPTICAL DEVICE**

(30) Priority: 22.03.2023 CN 202310295280
(71) Applicant: Huawei Technologies Co., Ltd., Shenzhen, Guangdong 518129 (CN)
(72) Inventor: DING, Bifeng, Shenzhen, Guangdong 518129 (CN); ZHONG, Xunqi, Shenzhen, Guangdong 518129 (CN); SHANGGUAN, Ying, Shenzhen, Guangdong 518129 (CN)
(74) Representative: Körber, Martin Hans
(86) International application number: PCT/CN2024/075855
(87) International publication number: WO 2024/193249

(57) **Abstract**

The present disclosure relates to a wavelength selective switch and an optical device related to the wavelength selective switch. The wavelength selective switch includes a 2D fiber array, including a first column of fibers and a second column of fibers, where fibers in the second column of fibers and fibers in the first column of fibers are alternately arranged in a switching direction, and the second column of fibers is offset from the first column of fibers by a predetermined spacing in a dispersion direction; a dispersion unit, configured to disperse a first beam from a first optical path adjustment component, to generate a plurality of first sub-beams corresponding to different wavelengths; and an optical switching engine, configured to: receive the plurality of first sub-beams, and operatively adjust directions of the plurality of first sub-beams, for the plurality of first sub-beams to be incident back to the dispersion unit. The dispersion unit is further configured to: multiplex at least a part of incident-back first sub-beams in the plurality of first sub-beams, to generate a multiplexed second beam, and guide the second beam to an output port via the first optical path adjustment component.

## Description

This application claims priority to Chinese Application No. 202310295280.2, filed on March 22, 2023 and entitled "WAVELENGTH SELECTIVE SWITCH AND RELATED OPTICAL DEVICE", which is incorporated herein by reference in its entirety.

### TECHNICAL FIELD

Embodiments of the present disclosure relate to the communication field, and more specifically, to a wavelength selective switch (Wavelength Selective Switch, WSS) and a related optical device like a reconfigurable optical add-drop multiplexer (Reconfigurable optical add-drop multiplexer, ROADM).

### BACKGROUND

With rapid development of social economy, optical networks are evolving toward a large capacity, a low delay, and intelligence, an early fixed optical add-drop multiplexer (Fixed optical add-drop multiplexer, FOADM) technology, and current mainstream reconfigurable optical add-drop multiplexer and optical cross-connect (Optical Cross-Connect, OXC) technologies constitute a core of a current optical network, and are also key technology directions for developing a next-generation optical network. A wavelength selective switch WSS is a core component of the OXC technology, and there is an urgent need and practical value for its port/channel expansion. Current mainstream technologies for the WSS are a diffraction grating based free space demultiplexing/multiplexing technology, and a liquid crystal on silicon (LCOS)-based optical switching technology. To be specific, wavelength division multiplexing signals input via a fiber array (Fiber Array, FA) port undergo wavelength separation via a diffraction grating, and then are focused on a focal plane of a lens; and an LCOS is placed on the focal plane, where a phase delay is controlled by controlling a unit voltage of the LCOS, to constitute a blazed grating, and a period of the grating is changed, so that beams of corresponding wavelengths can be diffracted to different angles, and finally, be converted into beams of different heights to be output via a specific port. In other words, when an appearance and a size of a module remain unchanged, port/channel expansion inevitably reduces a spacing between diffraction angles of a beam, that is, reduces a spacing between fibers on adjacent channels, and consequently, isolation deteriorates.

### SUMMARY

An objective of the present disclosure is to provide an improved wavelength selective switch and an optical device related to the wavelength selective switch.

According to a first aspect of the present disclosure, a wavelength selective switch is provided. The wavelength selective switch includes: a 2D fiber array, including a first column of fibers and a second column of fibers, where fibers in the second column of fibers and fibers in the first column of fibers are alternately arranged in a switching direction, the second column of fibers is offset from the first column of fibers by a predetermined spacing in a dispersion direction, the dispersion direction is perpendicular to the switching direction, any fiber in the 2D fiber array is suitable for serving as an input port, and any other fiber is suitable for serving as an output port; a first optical path adjustment component, configured to adjust a propagation direction of a first beam from the input port; a dispersion unit, configured to disperse the first beam from the first optical path adjustment component, to generate a plurality of first sub-beams corresponding to different wavelengths; and an optical switching engine, configured to: receive the plurality of first sub-beams, and operatively adjust directions of the plurality of first sub-beams, for the plurality of first sub-beams to be incident back to the dispersion unit. The dispersion unit is further configured to: multiplex at least a part of incident-back first sub-beams that are in the plurality of sub-beams and that are of desired wavelengths, to generate a multiplexed second beam, and guide the second beam to the output port via the first optical path adjustment component.

It should be understood that, the wavelength selective switch in the present disclosure, especially the 2D fiber array in the wavelength selective switch, is used, so that isolation between adjacent ports in the wavelength selective switch can be improved, or a module height of the wavelength selective switch can be greatly reduced under a same adjacent isolation requirement.

In some embodiments, the dispersion unit includes a grating. The grating has a first grating partition and a second grating partition that are alternately arranged in the switching direction, distribution of the first grating partition is designed to correspond to distribution of the fibers in the first column of fibers, and distribution of the second grating partition is designed to correspond to distribution of the fibers in the second column of fibers.

In some embodiments, both the first grating partition and the second grating partition have different linear densities, and a difference between the linear densities is designed to correspond to the predetermined spacing.

In some embodiments, the first optical path adjustment component is designed to project, on a switching plane, the first beam from the input port onto a first predetermined partition in the first grating partition and the second grating partition. A location of the first predetermined partition in the first grating partition and the second grating partition corresponds to a location of a fiber serving as the input port in the 2D fiber array, the switching plane is defined by the switching direction and a light propagation direction, and the light propagation direction is perpendicular to both the switching direction and the dispersion direction.

In some embodiments, the first optical path adjustment component includes a first lens and a second lens. The first lens is configured to converge, on the switching plane, the first beam on a rear focal plane of the first lens, the rear focal plane is also a front focal plane of the second lens, and the second lens projects, on the switching plane, the first beam onto the first predetermined partition.

In some embodiments, the first optical path adjustment component further includes a beam shaping component. The beam shaping component shapes a light spot of the first beam from the input port into that of a predetermined shape and a predetermined size, and the predetermined size is less than or equal to a size of the first grating partition or the second grating partition in the switching direction.

In some embodiments, the beam shaping component includes a third lens and a fourth lens, and the third lens and the fourth lens constitute a 4f system.

In some embodiments, the wavelength selective switch further includes a second optical path adjustment component, located between the dispersion unit and the optical switching engine, and configured to: guide the plurality of first sub-beams from the dispersion unit to the optical switching engine, and direct the plurality of direction-adjusted first sub-beams from the optical switching engine to be incident to a second predetermined partition in the first grating partition and the second grating partition. A location of the second predetermined partition in the first grating partition and the second grating partition corresponds to a location of a fiber serving as the output port in the 2D fiber array.

In some embodiments, the second optical path adjustment component is a fifth lens. The second lens and the fifth lens constitute a 4f system, the dispersion unit is located on an intermediate focal plane of the 4f system, and the optical switching engine is located on a tail focal plane of the 4f system.

In some embodiments, both the second lens and the fifth lens are curved reflectors.

In some embodiments, the second lens and the fifth lens are constituted on a same curved-surface reflector.

In some embodiments, the difference between the linear densities is within 0.3 G, where G represents a period of the first grating partition or the second grating partition.

In some embodiments, a distance between any two adjacent fibers in the first column of fibers or the second column of fibers in the switching direction ranges from 100 µm to 1 mm, and the predetermined spacing ranges from 0 µm to 500 µm.

In some embodiments, the optical switching engine is selected from a group including a liquid crystal on silicon and a micro-electro-mechanical reflector.

According to a second aspect of the present disclosure, an optical device is provided. The optical device includes the wavelength selective switch according to the first aspect.

In some embodiments, the optical device is a reconfigurable optical add-drop multiplexer.

It should be understood that the content described in the summary is not intended to limit key or important features of embodiments of the present disclosure or limit the scope of the present disclosure. Other features of the present disclosure will be readily understood through the following descriptions.

### BRIEF DESCRIPTION OF DRAWINGS

The foregoing and other features, advantages, and aspects of embodiments of this disclosure become more apparent in conjunction with the accompanying drawings and with reference to the following detailed descriptions. In the accompanying drawings, same or similar reference numerals indicate same or similar elements.
FIG. 1 is a diagram of a structure of a conventional wavelength selective switch;
FIG. 2 is a diagram of a structure of a conventional wavelength selective switch with a 1D fiber array whose density is increased;
FIG. 3 is a diagram of a 2D fiber array according to an example embodiment of the present disclosure;
FIG. 4 is a diagram of a design of a grating partition according to an example embodiment of the present disclosure;
FIG. 5 shows an optical architecture of a wavelength selective switch on a switching plane according to an example embodiment of the present disclosure;
FIG. 6 shows an optical architecture of a wavelength selective switch in a forward path on a dispersion plane according to an example embodiment of the present disclosure;
FIG. 7 shows an optical architecture of a wavelength selective switch in a return path on a dispersion plane according to an example embodiment of the present disclosure;
FIG. 8 shows an optical design example of a wavelength selective switch according to an optical architecture of the present disclosure; and
FIG. 9 shows another optical design example of a wavelength selective switch according to an optical architecture of the present disclosure.

### DESCRIPTION OF EMBODIMENTS

The following describes embodiments of the present disclosure are described in more detail with reference to accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In the descriptions of embodiments of the present disclosure, the term "including" and similar terms thereof shall be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

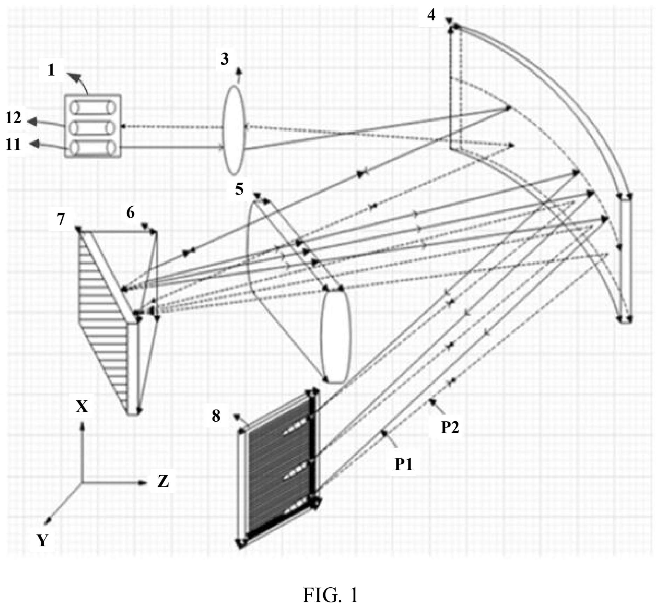

FIG. 1 is a diagram of a structure of a conventional wavelength selective switch. As shown in FIG. 1, the wavelength selective switch WSS may include a 1-dimensional (1D) fiber array 1, a convex lens 3, a curved reflector 4, a spherical lens 5, a triangular prism 6, and a reflective grating 7, and a liquid crystal on silicon (LCOS) 8 that are arranged along an optical path. Specifically, fibers in the 1D fiber array 1 may serve as input and output ports. Generally, a port may be selected as a common port 11. Then, a signal like a dense wavelength division multiplexing signal is input from the common port 11. After the dense wavelength division multiplexing signal passes through a system, an output signal of any wavelength combination may be output from any port 12 other than the common port 11, and may be reversely used. The convex lens 3 may be configured to: shape a beam, and implement conversion between an angle and a height in a switching direction. The curved reflector 4 has focal power in two directions: dispersion and switching, and is mainly configured to collimate a beam. The spherical lens 5 is mainly configured to perform system aberration compensation. The triangular prism 6 has a specific dispersion function. The reflective grating 7 is a main dispersion element, and is configured to: perform angular splitting on light of different frequencies, and enable these optical signals to continue to be transmitted to the curved reflector 4 along a return path on a same plane in different directions. The curved reflector 4 may reflect the optical signals of a plurality of wavelengths again, so that light of different wavelengths is focused and distributed on a same focal plane. The LCOS 8 may be located on the focal plane, and is configured to apply a voltage to a pixel at a location covered by an optical signal, to change a refractive index of a corresponding liquid crystal to change a phase. In this way, an incident beam P1 is diffracted to generate angle deflection, to generate output light P2. The output light P2 is transmitted along a reverse path and returns to an output port 12. In this way, closed-loop optical path transmission enables signal light of a specific wavelength to be transmitted to any specific signal port.

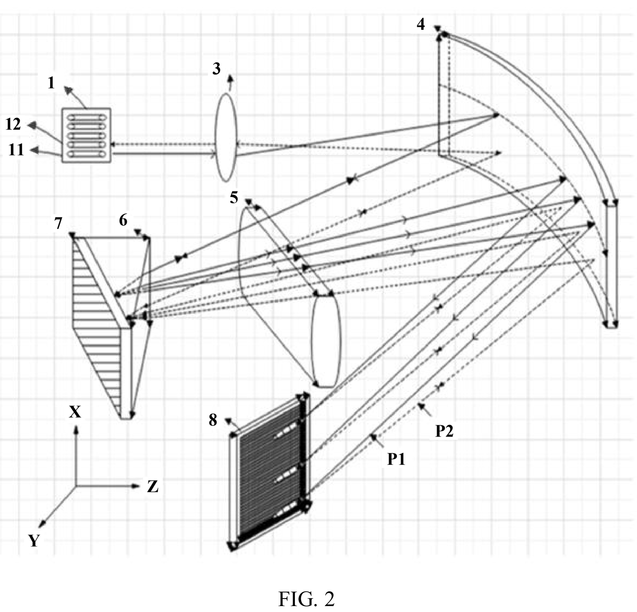

However, as a quantity of required ports/channels increases, when an original module height of the WSS is maintained, an angle step of emergent light 10 needs to be reduced, and the reduction of the angle step is converted, via the convex lens 3, into a reduction of a spacing between fibers in the 1D fiber array 1. For ease of understanding, FIG. 2 is a diagram of a structure of the conventional wavelength selective switch with a 1D fiber array whose density is increased. As shown in FIG. 2, at a given module height of the wavelength selective switch, to increase a quantity of fibers (or ports) in the 1D fiber array, a spacing between the ports 11 and 12 inevitably needs to be reduced. However, as the spacing between the ports is reduced, more beam energy returned from the port 12 is concatenated to the port 11, causing sharp deterioration of isolation between adjacent channels.

It should be understood that isolation between adjacent channels is a very important indicator during application of the wavelength selective switch or the like, and improvement of isolation between adjacent ports or reduction of a module height directly contributes to core competitiveness of the wavelength selective switch.

An objective of the present disclosure is to provide an improved wavelength selective switch architecture, which can improve isolation between adjacent ports or reduce a module height while maintaining an original module height of a wavelength selective switch. In particular, the concept of the present disclosure is implemented based on a novel 2D (two-dimensional) fiber array. Further, in particular, the present disclosure further proposes a novel grating partition design, and the grating partition design can be used to more easily guide light to a fiber port intended for output.

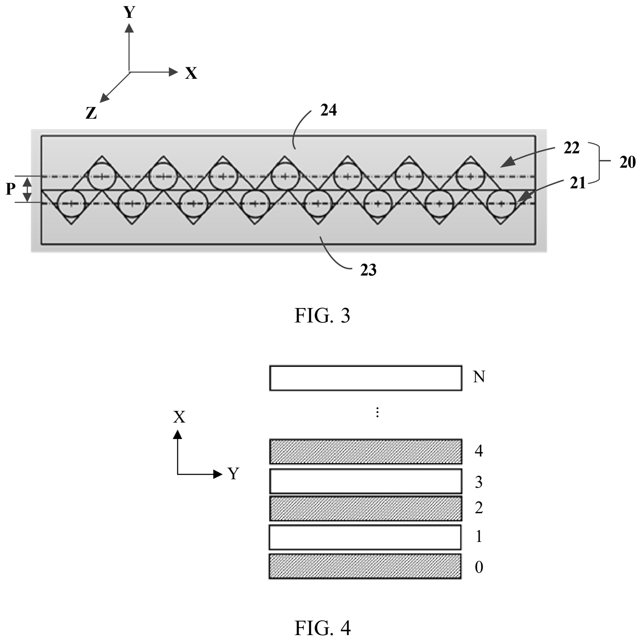

FIG. 3 is a diagram of a 2D fiber array according to an example embodiment of the present disclosure.

As shown in FIG. 3, the 2D fiber array 20 in the example of the present disclosure may include a first column of fibers 21 and a second column of fibers 22. According to a design of the present disclosure, the 2D fiber array 20 may be arranged as follows: Fibers in the second column of fibers 22 and fibers in the first column of fibers 22 are alternately arranged in a switching direction X, and the second column of fibers 22 is offset from the first column of fibers 2 by a predetermined spacing P in a dispersion direction Y. It should be understood that any fiber in the 2D fiber array may serve as an input port, and any other fiber may serve as an output port, so that an optical signal between any two ports of a WSS is input, and an optical signal of a desired wavelength is output.

It should be noted herein that the term "switching direction" in the present disclosure is a direction in which ports in a fiber array of a wavelength selective switch are switched, and therefore is also referred to as a "port switching direction", and a quantity of ports in the switching direction usually determines a size or a height of a module of the wavelength selective switch in a longitudinal direction; and the term "dispersion direction" is a direction in which a dispersion element in the wavelength selective switch performs dispersion. The switching direction X and the dispersion direction Y are perpendicular to each other, and both the switching direction X and the dispersion direction Y are perpendicular to a light propagation direction Z.

By way of example only, a distance between any two adjacent fibers in the first column of fibers 21 or the second column of fibers 22 in the switching direction X may range from, for example, 100 µm to 1 mm, and the predetermined spacing P may range from, for example, 0 µm to 500 µm.

In some embodiments, for example, the first column of fibers 21 and the second column of fibers 22 may be respectively fastened to corresponding V-shaped grooves in substrates 23 and 24. It is easy to understand that a manner of fastening the first column of fibers 21 and the second column of fibers 22 herein is merely an example. In another embodiment, the first column of fibers 21 and the second column of fibers 22 may be fastened in different manners.

It should be noted that although the 2D fiber array 20 is shown above by using two columns of fibers as an example, it should be understood that, in another embodiment, the 2D fiber array 20 in the present disclosure may further include more columns of fibers (for example, a third column of fibers, a fourth column of fibers, and an n^{th} column of fibers, where n may be an integer greater than or equal to 2, 3, 4, 5, or the like). Herein, it should be further understood that, when n is greater than 2, for arrangement of the n^{th} column of fibers relative to an (n-1)^{th} column of fibers, refer to a manner of the second column of fibers 22 relative to the first column of fibers 21. Details are not described herein again.

In addition, because the second column of fibers 22 is offset from the first column of fibers 21 by the predetermined spacing P in the dispersion direction, it may be further understood that, when the module of the entire wavelength selective switch maintains a height of the entire module, additional adjacent isolation in addition to adjacent isolation caused in the switching direction is provided.

It should be further understood that, for the foregoing 2D fiber array in the present disclosure, a person skilled in the art may implement a corresponding wavelength selective switch by designing a proper optical path. The optical path may include but is not limited to being implemented by using an optical path adjustment component, a dispersion unit, and an optical switching engine. The optical path adjustment component may include a first optical path adjustment component located between the 2D fiber array and the dispersion unit and an optional second optical path adjustment component located between the dispersion unit and the optical switching engine.

Specifically, the first optical path adjustment component may be, for example, configured to guide a first beam from the input port to the dispersion unit. The dispersion unit may be configured to disperse the first beam from the first optical path adjustment component, to generate a plurality of first sub-beams corresponding to different wavelengths. The optical switching engine may be configured to: receive the plurality of first sub-beams, and operatively adjust directions of the plurality of first sub-beams, for the plurality of first sub-beams to be incident back to the dispersion unit (or via the optional second optical path adjustment component). In addition, the dispersion unit is further configured to: multiplex at least a part of incident-back first sub-beams that are in the plurality of first sub-beams and that are of desired wavelengths, to generate a multiplexed second beam, and guide the second beam to the output port via the first optical path adjustment component.

According to the example in the present disclosure, the first optical path adjustment component and the second optical path adjustment component may include various types of optical devices, which are not limited to a proper quantity of lenses, lens groups, gratings, and the like. Typically, a lens or a lens group may include a cylindrical lens, a spherical lens, or a reflector. The dispersion unit may include a prism, a transmissive diffraction grating, a reflective grating, or the like. The optical switching engine may include a liquid crystal on silicon (LCOS), a micro-electro-mechanical reflector (MEMS), digital light processor (DLP), or the like.

Particularly, in an embodiment in which the dispersion unit is a grating, the present disclosure further proposes a design of a grating partition corresponding to fiber distribution of the 2D fiber array in the present disclosure.

For ease of understanding, FIG. 4 is a diagram of a design of a grating partition according to an example embodiment of the present disclosure. Grating partitions shown in FIG. 4 are designed for a 2D fiber array having only the first column of fibers and the second column of fibers described above. As shown in FIG. 4, a grating may have a first grating partition and a second grating partition that are alternately distributed in the switching direction X. By way of example only, even numbers 0, 2, 4, 6, ... correspond to the first grating partition, and odd numbers 1, 3, 5, 7, ... correspond to the second grating partition. In this example, distribution of the first grating partition may correspond to distribution of the fibers in the first column of fibers 21 in the 2D fiber array, and distribution of the second grating partition may correspond to distribution of the fibers in the second column of fibers 22 in the 2D fiber array. In other words, each fiber in the first column of fibers 21 and the second column of fibers 22 has a corresponding grating partition.

By way of example only, a size of the first grating partition or the second grating partition in the switching direction X may range from 100 µm to several millimeters, for example, from 100 µm to 2 mm.

To implement incidence of a beam input from a fiber serving as an input port in the 2D fiber array to a corresponding grating partition, in some embodiments, the incidence may be implemented through guidance or adjustment of the first optical path adjustment component in the switching direction. For example, the optical path adjustment component may be designed to project (for example, via collimated incidence), on a switching plane (namely, an XZ plane), the first beam from the input port onto a first predetermined partition in the first grating partition and the second grating partition. A location of the first predetermined partition in the first grating partition and the second grating partition corresponds to a location of a fiber serving as the input port in the 2D fiber array.

According to the design of the present disclosure, a size of a light spot incident to the grating from the fiber serving as the input port in the 2D fiber array shall be less than or equal to a size of the first grating partition or the second grating partition in the switching direction X. This can avoid optical crosstalk between different ports. In some embodiments, the beam input from the fiber serving as the input port in the 2D fiber array may be shaped, to generate a light spot of a proper size and shape. This may also be completed by using the first optical path adjustment component.

In addition, because the second column of fibers 22 is offset from the first column of fibers 22 by the predetermined spacing P in the dispersion direction Y, it is necessary to design an optical path of the first column of fibers 21 serving as the output port and an optical path of the second column of fibers 22 serving as the output port, to enable the optical path of the first column of fibers 21 to be different from the optical path of the second column of fibers 22 in the dispersion direction Y. In some embodiments, the foregoing design may be implemented by making both the first grating partition and the second grating partition have different linear densities. A difference between the linear densities may be designed to correspond to the predetermined spacing P described above. By way of example only, the difference between the linear densities is, for example, within 0.3 G, where G represents a period of the first grating partition or the second grating partition.

The foregoing describes the design of the corresponding grating partition by using an example in which the 2D fiber array includes only the first column of fibers and the second column of fibers. It should be understood that, when the 2D fiber array includes more columns of fibers, the grating may include correspondingly more partitions, such as a third grating partition corresponding to a third column of fibers, a fourth grating partition corresponding to a fourth column of fibers, and so on. The plurality of grating partitions are also alternately arranged in the switching direction X in an order corresponding to an arrangement order of the plurality of columns of fibers.

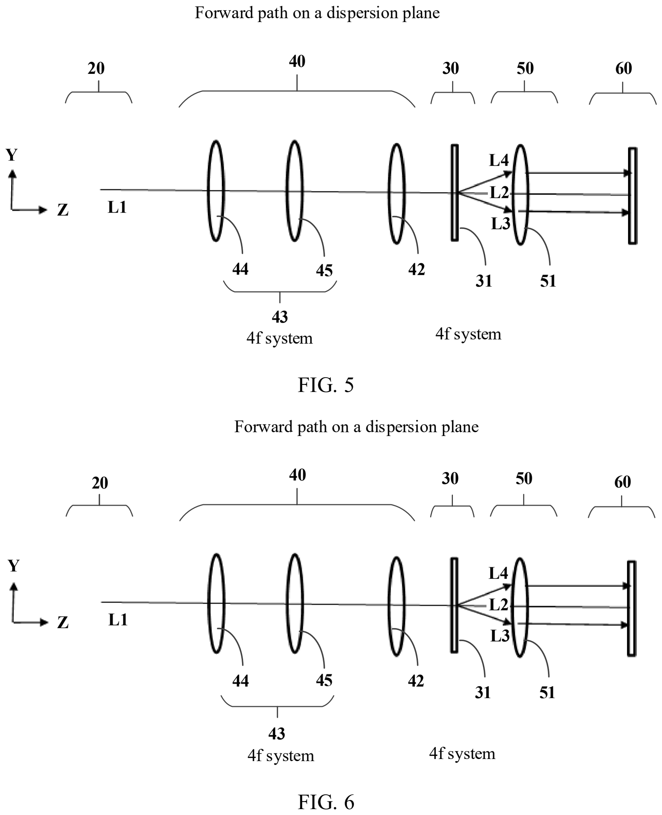

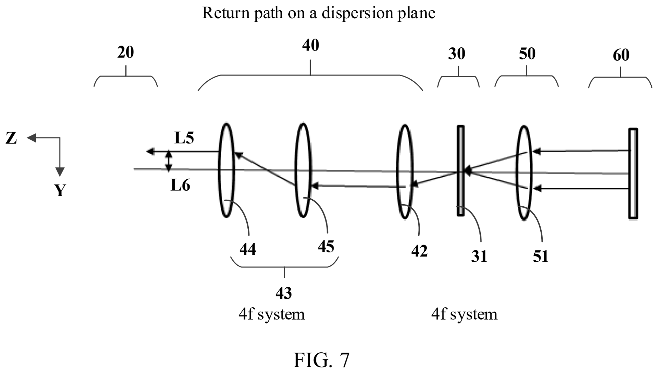

The foregoing briefly describes an overall design idea of the wavelength selective switch implemented for the 2D fiber array designed for the present disclosure. The following describes an example optical architecture of a wavelength selective switch having a grating as a dispersion unit according to an example embodiment of the present disclosure with reference to FIG. 5 to FIG. 7. FIG. 5 shows an optical architecture of a wavelength selective switch on a switching plane according to an example embodiment of the present disclosure. FIG. 6 shows an optical architecture of a wavelength selective switch in a forward path of a dispersion plane according to an example embodiment of the present disclosure. FIG. 7 shows an optical architecture of a wavelength selective switch in a return path of a dispersion plane according to an example embodiment of the present disclosure.

As shown in FIG. 5 to FIG. 7, a first optical path adjustment component 40 is located between a 2D fiber array 20 and a dispersion unit 30, and an optional second optical path adjustment component 50 is located between the dispersion unit 30 and an optical switching engine 60. In some examples, the dispersion unit 30 is a grating 31. In some other examples, existence of the second optical path adjustment component 50 depends on a control capability of the optical switching engine 60. It should be noted that, for clarity, for the first optical path adjustment component 40, FIG. 5 shows only an optical device that functions on a switching plane (namely, an XY plane), and FIG. 6 shows only an optical device that functions on a dispersion plane (namely, a YZ plane). An optical device that does not function on the switching plane or the dispersion plane is omitted.

For example, as shown in an architecture on the switching plane in FIG. 5, the first optical path adjustment component 40 may include a first lens 41 and a second lens 42. The first lens 41 is configured to converge, on the switching plane (namely, the XY plane), a first beam from an input port (assumed to be a COM port) on a rear focal plane of the first lens 41, where the rear focal plane is a front focal plane of the second lens 41, so that the second lens 42 can project (for example, via collimated incidence), on the switching plane (namely, the XY plane), the first beam onto a first predetermined partition in the grating 31. As described above, it should be understood that a location of the first predetermined partition in a first grating partition and a second grating partition in the grating corresponds to a location of a fiber serving as the input port in the 2D fiber array. Then, the grating 31 disperses the first beam from the first optical path adjustment component 40, to generate a plurality of first sub-beams corresponding to different wavelengths.

Further, the optional second optical path adjustment component 50 may receive the plurality of first sub-beams, and converge the plurality of first sub-beams on the switching plane (namely, the XY plane) on the optical switching engine 60 like an LCOS, to adjust directions of the plurality of first sub-beams. Subsequently, a plurality of direction-adjusted first sub-beams of desired wavelengths from the optical switching engine are incident back to a second predetermined partition in the first grating partition and the second grating partition. A location of the second predetermined partition in the first grating partition and the second grating partition corresponds to a location of a fiber serving as the output port in the 2D fiber array. For example, the second optical path adjustment component 50 may be, for example, a fifth lens 51.

In the foregoing example of the present disclosure, the second lens 42 and the fifth lens 51 may constitute a 4f system, the dispersion unit 30 may be located on an intermediate focal plane of the 4f system, and the optical switching engine 60 may be located on a tail focal plane of the 4f system.

According to the foregoing optical path on the switching plane, it may be understood that a direction of the first beam incident from the input port (for example, the COM port) is adjusted on the optical switching engine 60, and after being transformed by the fifth lens 51, the direction-adjusted sub-beams of the desired wavelengths occupy different areas (namely, the foregoing second predetermined partition) of the grating 31 in the switching direction X, which is also a basis for the grating partition design mentioned above. Subsequently, these sub-beams are multiplexed via the grating 31 to generate a second beam, and then the second beam is anti-symmetrically mirrored to the front focal plane via, for example, the second lens 42. A 2f system including the first lens 41 finally converts beams at different angles on the front focal plane into the beams of heights, and the beams are output in parallel and coupled to a fiber that is in the fiber array 20 and that is desired to serve as the output port.

As shown in architectures on the dispersion plane in FIG. 6 and FIG. 7, the first optical path adjustment component 40 may further include a beam shaping component 43. The beam shaping component 43 may shape a light spot of the first beam from the input port into that of a predetermined shape and a predetermined size, so that the predetermined size is less than or equal to a size of the first grating partition or the second grating partition in the switching direction X. For example, the beam shaping component 43 may include, for example, a third lens 44 and a fourth lens 45. The third lens 44 and the fourth lens 45 may constitute a 4f system. Further, in the dispersion plane, the second lens 42 and the fifth lens 51 also constitute a 4f system.

Without loss of generality, it may be assumed herein that incident light L1 is a central incident light on the dispersion plane, and may represent a beam in two polarization states that is usually input from the input port. First, the incident light L1 (namely, the first beam described above) may be shaped by the beam shaping component 43 including the third lens 44 and the fourth lens 45. Usually, the incident light having a circular light spot is shaped into that having an elliptical light spot. The shaped beam is transmitted to the grating 31 via the second lens 42. Because there is a linear density on the grating 31, the incident light L1 is diffracted (or dispersed), to generate a plurality of sub-beams (marked by L2, L3, and L4 in the figure) of different wavelengths. The plurality of sub-beams of different wavelengths are subsequently propagated at different angles. Finally, signal light of the sub-beams of different wavelengths is evenly tiled on the optical switching engine 60 via the third lens 51.

In an embodiment in which the optical switching engine 60 is an LCOS (liquid crystal on silicon), it may be understood that a diffraction phase may be changed by controlling pixel voltages in different areas of the LCOS, so that an incident beam in any area may be reflected at different angles. Subsequently, via the fifth lens 51, reflected light at different angles is converted into the reflected light of heights in the switching direction, and the reflected light is incident on the second predetermined partition in the grating. As described above, for the 2D fiber array having only the first column of fibers and the second column of fibers, slightly different linear densities are given for the first grating partition and the second grating partition in the designed grating partitions. In this way, it may be understood as that when the input port is in the first column of fibers and the output port is in the second column of fibers (or vice versa), a part of return light L5 (that is, a multiplexed beam of at least a part of first sub-beams that are in the plurality of first sub-beams and that are of desired wavelengths or the second beam) may generate an angle in the dispersion direction Y, and then generate a lateral displacement on the 2D fiber array 20 side via the second lens 42, the fourth lens 45, and the third lens 44 in sequence, to be output from the corresponding output port. In addition, the other part of the return light L6 may be designed to return along an original path. It should be understood that, when the input port is in the first column of fibers and the output port is in the second column of fibers (or vice versa), distribution of two parts of light in the dispersion direction Y exactly corresponds to distribution of port locations of the disclosed 2D fiber array. To be specific, the first grating partition in the grating 31 corresponds to the first column of fibers in the 2D fiber array, and the second grating partition in the grating corresponds to the second column of fibers in the 2D fiber array; or vice versa.

For example, if a difference between a linear density of the first grating partition and a linear density of the second grating partition is within 0.7 G/mm, where G represents a period of the first grating partition and the second grating partition, during dispersion return, light L5 and light L6 constitute an angle of 0.075°, and are incident to different grating partitions in the first grating partition and the second grating partition. Further, if a focal length of an entire system is 82 mm, a displacement difference between the light L5 and the light L6 in the dispersion direction becomes about 500 µm after the light L5 and the light L6 are amplified by the 4f system including the third lens 44 and the fourth lens 45, in other words, the predetermined spacing between the first column of fibers and the second column of fibers in the 2D fiber array in the dispersion direction is about 500 µm. It can be further learned through calculation that an additional isolation gain brought by the predetermined spacing may be about 15 dB. It is easy to understand that different additional isolation gains may be achieved by designing different predetermined spacings between the first column of fibers and the second column of fibers in the 2D fiber array in the dispersion direction.

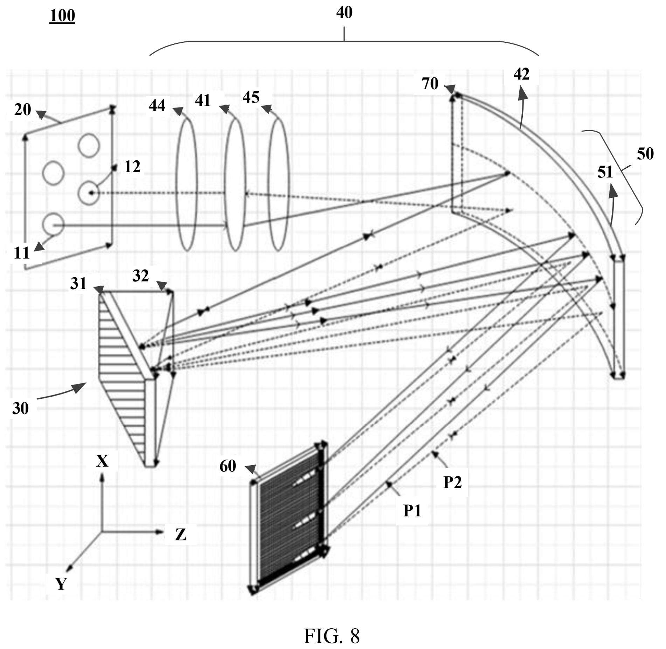

FIG. 8 shows an optical design example of a wavelength selective switch 100 according to an optical architecture of the present disclosure.

As shown in FIG. 8, a 2D fiber array 20, a first optical path adjustment component 40, a dispersion unit 30, a second optical path adjustment component 50, and an optical switching engine 60 are sequentially arranged in the wavelength selective switch 100 along an optical path.

Particularly, a third lens 44 serving as a cylindrical lens, a first lens 41 serving as a cylindrical lens, a fourth lens 45 serving as a cylindrical lens, and a second lens 42 serving as a reflector are sequentially arranged in the first optical path adjustment component 40 along the optical path. The first lens 41 serving as the cylindrical lens and the second lens 42 serving as the reflector are both suitable for shaping a direction of a beam on a switching plane (namely, an XZ plane). The third lens 44 serving as the cylindrical lens and the fourth lens 45 serving as the cylindrical lens are both suitable for shaping a beam on a dispersion plane (namely, a YZ plane). For example, a light spot of the beam is shaped into an elliptical light spot of hundreds of microns in the tangential direction and tens of microns in the dispersion direction. Then, the beam obtained by performing direction adjustment by the first optical path adjustment component 40 may be projected (for example, via collimated incidence) onto the dispersion unit 30.

The dispersion unit 30 may be a prism grating, and may be constituted by combining (for example, gluing) a reflective grating 31 and a prism 32. It is easy to understand that, in another variant example, the prism grating may alternatively be directly replaced with the reflective grating 31.

The second optical path adjustment component 50 may include a fifth lens 51 serving as a reflector. In this example, for convenience, the fifth lens 51 and the second lens 42 serving as the reflector may be constituted on a same curved reflector 70.

In this example, the optical switching engine 60 may be an LCOS (liquid crystal on silicon). It is easy to understand that, in another variant example, the optical switching engine 60 may alternatively be replaced with an MEMS (micro-electro-mechanical reflector).

It should be noted that, although in the example in FIG. 8, the second lens 41 and the fifth lens 51 are in a curved reflector form, the optical path shown in FIG. 8 is designed according to the optical architecture described with respect to the switching direction and the dispersion direction in FIG. 5 to FIG. 7.

In the example in FIG. 8, traveling of the beam along the optical path is briefly described as follows: First, a first beam from an input port 11 may be shaped by, for example, an auxiliary component of the 2D optical array 20 into the beam having a circular light spot of about 100 microns; then, the beam having the circular light spot is sequentially transmitted in free space to the third lens 44, the first lens 41, and the fourth lens 45; and further, the circular light spot is shaped into an elliptical light spot of hundreds of microns in the tangential direction X and tens of microns in the dispersion direction Y. Subsequently, the first beam having the elliptical light spot may be focused to a first predetermined partition in the grating 31 via the second lens 42 serving as a part of the curved reflector 70. The grating 31 has a strong dispersion capability, and reflects (or disperses) a plurality of sub-beams of different wavelengths at different diffraction angles. Herein, the prism 32 also has a specific dispersion function, but a main function of the prism 32 is to homogenize diffraction angles of different wavelengths. Subsequently, the sub-beams of different wavelengths are evenly arranged on the optical switching engine 60 like an LCOS from left to right via the fifth lens 51 serving as the other part of the curved reflector 70. For example, when the optical switching engine 60 is an LCOS, the LCOS may apply voltages to pixels covered by the beams, to change a refractive index of a corresponding liquid crystal to change phases of the beams. In this way, the beams incident to the LCOS are reflected, and further, transmission directions of the plurality of sub-beams are changed. The plurality of sub-beams whose directions are changed are incident to a second predetermined partition in the grating 31 along an original optical path at different heights, so that the returned beam can be output from a desired port like an output port 12. It should be understood that, when the input port is in the first column of fibers and the output port is in the second column of fibers (or vice versa), because of the grating partition design mentioned above, an optical signal returned to the output port generates specific displacement in the dispersion direction, and the displacement brings an additional adjacent isolation gain.

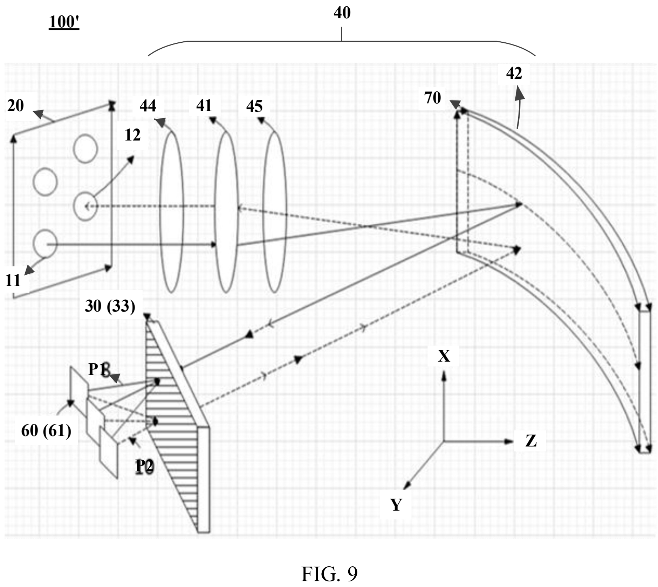

FIG. 9 shows another optical design example of a wavelength selective switch 100' according to an optical architecture of the present disclosure.

As shown in FIG. 9, the wavelength selective switch 100' is basically the same as the wavelength selective switch 100 shown in FIG. 8, and a difference between the wavelength selective switch 100' and the wavelength selective switch 100 shown in FIG. 8 lies only in that the prism grating or the reflective grating 31 serving as the dispersion unit 30 in FIG. 8 is replaced with a transmissive grating 33 in FIG. 9, and the LCOS (liquid crystal on silicon) serving as the optical switching engine 60 is replaced with an MEMS (micro-electro-mechanical reflector) 61 in FIG. 9. In addition, the MEMS 61 directly receives and operatively reflects light transmitted and diffracted by the transmissive grating 33. Furthermore, the second optical path adjustment component 50 mentioned above may be omitted.

The following briefly describes a process of switching a beam between different ports in the example in FIG. 9. First, a first beam from an input port 11 may be shaped by, for example, an auxiliary component of the 2D optical array 20 into the beam having a circular light spot of about 100 microns; then, the beam having the circular light spot is sequentially transmitted in free space to the third lens 44, the first lens 41, and the fourth lens 45; and further, the circular light spot is shaped into an elliptical light spot of hundreds of microns in the tangential direction X and tens of microns in the dispersion direction Y. Subsequently, the first beam having the elliptical light spot may be focused to a first predetermined partition in the transmissive grating 33 via the second lens 42 serving as a part of the curved reflector 70. The transmissive grating 33 has a strong dispersion capability, and diffracts (or disperses) a plurality of sub-beams of different wavelengths at different diffraction angles. Then, optical signals of different wavelengths are evenly arranged on the MEMS 61 from left to right, and the MEMS 61 may independently control diffraction phases of optical signals in different areas. In this way, a target optical signal P2 is incident to a predetermined partition in the transmissive grating 33 at a specific diffraction angle, and then is reflected by the second lens 42 and returned to a target port 12. With reference to the grating partition design mentioned above, the optical signal returned to the target port 12 generates specific lateral displacement, and the displacement brings an additional adjacent isolation gain.

The foregoing describes in detail a design principle and a specific implementation of the wavelength selective switch according to the present disclosure. It should be understood that the 2D fiber array according to the present disclosure is used, so that adjacent isolation of the wavelength selective switch can be improved (an adjacent isolation gain amplitude may be up to more than 10 dB), or a module height can be greatly reduced under a same adjacent isolation requirement. Compared with a conventional solution in which additional isolation is obtained by increasing a height, the solution in the present disclosure better meets a requirement of a customer for reducing a height. In addition, in an embodiment in which a grating serves as a dispersion unit, the present disclosure further proposes a novel grating partition design, which helps guide a beam to return to a desired output port of a 2D fiber array. In addition to the foregoing wavelength selective switch, the present disclosure may further relate to an optical device including the wavelength selective switch. The optical device may include but is not limited to a reconfigurable optical add-drop multiplexer (ROADM). It is easy to understand that the wavelength selective switch-based optical device in the present disclosure may also obtain beneficial technical effect brought by the wavelength selective switch in the present disclosure.

Although the present invention has been illustrated and described in detail in the accompanying drawings and the foregoing descriptions, such illustrations and descriptions should be regarded to be illustrative or examples rather than limiting. The present invention is not limited to the disclosed embodiments. When practicing the claimed invention, a person skilled in the art can understand and practice other variations of the disclosed embodiments by studying the accompanying drawings, the disclosure, and the appended claims.

In the claims, the word "comprise" does not exclude other elements, and the indefinite article "a" or "an" does not exclude a plurality. A single element or other units may fulfill functions of a plurality of items described in the claims. The mere fact that some features are only described in mutually different embodiments or dependent claims does not mean that a combination of these features cannot be advantageously used. Without departing from the scope of this application, the protection scope of this application covers any possible combination of features disclosed in various embodiments or dependent claims.

Further, any reference numeral in the claims should not be construed as limiting the scope of the present invention.

## Claims

1. A wavelength selective switch, comprising:
a 2D fiber array (20), comprising a first column of fibers (21) and a second column of fibers (22), wherein fibers in the second column of fibers (22) and fibers in the first column of fibers (21) are alternately arranged in a switching direction (X), the second column of fibers (22) is offset from the first column of fibers (21) by a predetermined spacing (P) in a dispersion direction (Y), the dispersion direction (Y) is perpendicular to the switching direction (X), any fiber in the 2D fiber array (20) is suitable for serving as an input port, and any other fiber is suitable for serving as an output port;
a first optical path adjustment component (40), configured to adjust a propagation direction of a first beam from the input port;
a dispersion unit (30), configured to disperse the first beam from the first optical path adjustment component (30), to generate a plurality of first sub-beams corresponding to different wavelengths; and
an optical switching engine (60), configured to: receive the plurality of first sub-beams, and operatively adjust directions of the plurality of first sub-beams, for the plurality of first sub-beams to be incident back to the dispersion unit (40), wherein
the dispersion unit (40) is further configured to: multiplex at least a part of incident-back first sub-beams that are in the plurality of first sub-beams and that are of desired wavelengths, to generate a multiplexed second beam, and guide the second beam to the output port via the first optical path adjustment component (40).

2. The wavelength selective switch according to claim 1, wherein the dispersion unit (30) comprises a grating (31), the grating (31) has a first grating partition and a second grating partition that are alternately arranged in the switching direction (X), distribution of the first grating partition is designed to correspond to distribution of the fibers in the first column of fibers (21), and distribution of the second grating partition is designed to correspond to distribution of the fibers in the second column of fibers (22).

3. The wavelength selective switch according to claim 1, wherein both the first grating partition and the second grating partition have different linear densities, and a difference between the linear densities is designed to correspond to the predetermined spacing (P).

4. The wavelength selective switch according to claim 2 or 3, wherein the first optical path adjustment component (40) is designed to project, on a switching plane, the first beam from the input port onto a first predetermined partition in the first grating partition and the second grating partition, a location of the first predetermined partition in the first grating partition and the second grating partition corresponds to a location of a fiber serving as the input port in the 2D fiber array (20), the switching plane is defined by the switching direction (X) and a light propagation direction (Z), and the light propagation direction (Z) is perpendicular to both the switching direction (X) and the dispersion direction (Y).

5. The wavelength selective switch according to claim 4, wherein the first optical path adjustment component (40) comprises a first lens (41) and a second lens (42), the first lens (41) is configured to converge, on the switching plane, the first beam on a rear focal plane of the first lens (41), the rear focal plane is also a front focal plane of the second lens (42), and the second lens (42) projects, on the switching plane, the first beam onto the first predetermined partition.

6. The wavelength selective switch according to claim 4, wherein the first optical path adjustment component (40) further comprises a beam shaping component (43), the beam shaping component (43) shapes a light spot of the first beam from the input port into that of a predetermined shape and a predetermined size, and the predetermined size is less than or equal to a size of the first grating partition or the second grating partition in the switching direction (X).

7. The wavelength selective switch according to claim 6, wherein the beam shaping component (43) comprises a third lens (44) and a fourth lens (45), and the third lens (44) and the fourth lens (45) constitute a 4f system.

8. The wavelength selective switch according to claim 5, further comprising a second optical path adjustment component (50), located between the dispersion unit (30) and the optical switching engine (60), and configured to: guide the plurality of first sub-beams from the dispersion unit to the optical switching engine (60), and direct the plurality of direction-adjusted first sub-beams from the optical switching engine (60) to be incident to a second predetermined partition in the first grating partition and the second grating partition, wherein a location of the second predetermined partition in the first grating partition and the second grating partition corresponds to a location of a fiber serving as the output port in the 2D fiber array (20).

9. The wavelength selective switch according to claim 5, wherein the second optical path adjustment component (50) is a fifth lens (51), the second lens (42) and the fifth lens (50) constitute a 4f system, the dispersion unit (30) is located on an intermediate focal plane of the 4f system, and the optical switching engine (60) is located on a tail focal plane of the 4f system.

10. The wavelength selective switch according to claim 9, wherein both the second lens (42) and the fifth lens (51) are curved reflectors.

11. The wavelength selective switch according to claim 10, wherein the second lens (42) and the fifth lens (51) are constituted on a same curved reflector.

12. The wavelength selective switch according to claim 3, wherein the difference between the linear densities is within 0.3 G, and G represents a period of the first grating partition or the second grating partition.

13. The wavelength selective switch according to claim 2 or 3, wherein a distance between any two adjacent fibers in the first column of fibers (21) or the second column of fibers (22) in the switching direction (X) ranges from 100 µm to 1 mm, and the predetermined spacing (P) ranges from 0 µm to 500 µm.

14. The wavelength selective switch according to claim 2 or 3, wherein the optical switching engine (60) is selected from a group comprising a liquid crystal on silicon (LCOS) and a micro-electro-mechanical reflector (MEMS).

15. An optical device, comprising the wavelength selective switch according to any one of claims 1 to 14.

16. The optical device according to claim 15, wherein the optical device is a reconfigurable optical add-drop multiplexer (ROADM).
